# DEMANDE DE BREVET EUROPEEN

(11) **EP 4 624 249 A1**
(43) Date de publication de la demande: **01.10.2025**
(21) Numéro de dépôt: 25166286.2
(22) Date de dépôt: 26.03.2025
(51) Int. Cl.: B60N 2/70, B60N 2/72

(54) **NAPPE DE SUSPENSION D'UNE ASSISE DE SIÈGE DE VÉHICULE**

(30) Priorité: 27.03.2024 FR 2403117
(71) Demandeur: Renault s.a.s, 92100 Boulogne Billancourt (FR)
(72) Inventeur: EL-MHARD, Lahcen, 78280 GUYANCOURT (FR); LESBATS, Fabrice, 78280 GUYANCOURT (FR); SOUVILLE, Philippe, 78280 GUYANCOURT (FR)

(57) **Abrégé**

L'invention concerne une nappe de suspension (10) d'une assise de siège de véhicule (100), la nappe de suspension (10) comprenant :
- un film plastique (20) présentant une extrémité avant (24) et une extrémité arrière (25) ; et
- une structure d'accrochage (30) comportant un élément d'accrochage avant (40) et un élément d'accrochage arrière (50),

dans laquelle l'élément d'accrochage avant (40) est surmoulé dans l'extrémité avant (24) du film plastique (20) et l'élément d'accrochage arrière (50) est surmoulé dans l'extrémité arrière (25) du film plastique (20),
dans laquelle la structure d'accrochage (30) est monobloc, de sorte que l'élément d'accrochage avant (40) et l'élément d'accrochage arrière (50) sont venus de matière avec au moins un élément structurel intermédiaire (60) espacé par rapport au film plastique (20).

## Description

### Domaine technique

La présente invention concerne une nappe de suspension d'une assise de siège de véhicule.

### Arrière-plan technologique

Un siège de véhicule comprend généralement une assise et un dossier, ainsi qu'une nappe de suspension placée dans l'assise et servant à assouplir l'assise lorsqu'une personne est assise sur ledit siège.

Le document WO 2021/130459 A1 se rapporte à une nappe de suspension d'une assise de siège de véhicule comprenant un élément d'accrochage avant et un élément d'accrochage arrière. L'élément d'accrochage avant est accroché à une barre anti-sous-marinage placée à l'avant de l'assise, au moyen de crochets insérés dans des orifices de la barre anti-sous-marinage. L'élément d'accrochage arrière est accroché à une barre cylindrique que comporte une traverse arrière.

### Résumé de l'invention

Une nappe de suspension selon l'invention est aisée à monter dans une assise de siège de véhicule.

L'invention a pour objet une nappe de suspension d'une assise de siège de véhicule.

Selon l'invention, la nappe de suspension comprend :
- un film plastique présentant une extrémité avant et une extrémité arrière ; et
- une structure d'accrochage comportant un élément d'accrochage avant et un élément d'accrochage arrière.

L'élément d'accrochage avant est surmoulé dans l'extrémité avant du film plastique et l'élément d'accrochage arrière est surmoulé dans l'extrémité arrière du film plastique. La structure d'accrochage est monobloc, de sorte que l'élément d'accrochage avant et l'élément d'accrochage arrière sont venus de matière avec au moins un élément structurel intermédiaire espacé par rapport au film plastique. Le fait que la structure d'accrochage soit monobloc tend à faciliter le montage de la nappe de suspension dans l'assise de siège de véhicule, car l'élément d'accrochage avant et l'élément d'accrochage arrière font partie d'une seule et même pièce qui peut être manipulée comme un tout et n'ont pas à être fixés l'un après l'autre. La structure d'accrochage est avantageusement obtenue par moulage, notamment d'un polymère. En outre, le film plastique est à demeure dans la nappe de suspension puisque les éléments d'accrochage avant et arrière sont surmoulés dans les extrémités avant et arrière du film plastique. Ainsi, il est aisé d'ajuster le confort de l'assise de siège de véhicule, simplement en modifiant l'épaisseur et/ou la largeur du film plastique, sans modifier la structure d'accrochage. De plus, il n'y a pas de fixation du film plastique à l'armature de l'assise de siège, car cette fixation est réalisée par les éléments d'accrochage avant et arrière qui sont surmoulés dans les extrémités avant et arrière du film plastique. Ceci tend à éliminer, ou à tout le moins fortement limiter, le bruit dû au glissement du film plastique par rapport à l'armature de l'assise de siège.

Selon une caractéristique possible de l'invention, l'élément d'accrochage avant comporte une plaque et au moins un crochet, ledit au moins un crochet comprenant une première extrémité s'étendant le long de la plaque et par lequel il est solidarisé à ladite plaque et une deuxième extrémité libre qui est parallèle à la première extrémité, et ledit au moins un crochet délimitant partiellement un canal interne oblong, une plus grande dimension du canal interne oblong, en section transversale orthogonalement à la première extrémité et à la deuxième extrémité libre, étant selon un axe formant un angle non nul avec un plan dans lequel la plaque s'étend. L'au moins un crochet est amené à être encliqueté sur une barre cylindrique d'une traverse avant en insérant cette barre cylindrique dans le canal interne oblong. L'angle non nul avec le plan de la plaque autorise un basculement de la structure d'accrochage autour de cette barre cylindrique comme point d'appui. Ceci facilite encore le montage de la nappe de suspension. L'angle est avantageusement inférieur ou égal à 20°, préférentiellement inférieur ou égal à 10°. Avantageusement, ledit au moins un crochet est incurvé sur plus de 180° en allant de la première extrémité à la deuxième extrémité libre, ce qui permet au crochet d'enserrer la barre cylindrique de façon à permettre le basculement de la structure d'accrochage. Avantageusement, l'élément d'accrochage avant comprend une pluralité de crochets, par exemple deux crochets, répartis le long de la plaque. Ces crochets sont amenés à être encliquetés sur une barre cylindrique d'une traverse avant, ce qui facilite encore le montage de la nappe de suspension.

Selon une caractéristique possible de l'invention, l'élément d'accrochage avant comporte une bosse anti-sous-marinage entre l'extrémité avant du film plastique et la plaque, la bosse anti-sous-marinage étant en saillie à l'opposé de la deuxième extrémité libre du crochet par rapport à la plaque. La bosse anti-sous-marinage a vocation à être recouverte par une matelassure qui est déposée après avoir monté la nappe de suspension dans l'assise de siège de véhicule. En prévoyant que la bosse anti-sous-marinage fait partie de la structure d'accrochage, il n'est pas nécessaire de positionner la nappe de suspension par rapport à une barre anti-sous-marinage qui fait partie d'une armature de l'assise de siège de véhicule.

Selon une caractéristique possible de l'invention, l'élément d'accrochage arrière comprend une nervure et au moins un clip faisant saillie de la nervure. L'au moins un clip est amené à être clipsé sur une barre cylindrique d'une traverse arrière, ce qui facilite encore le montage de la nappe de suspension. Avantageusement, l'élément d'accrochage arrière comprend une pluralité de clips, par exemple deux clips, répartis le long de la nervure.

Selon une caractéristique possible de l'invention, la structure d'accrochage comporte deux dits éléments structurels intermédiaires disposés de part et d'autre du film plastique, et chacun des deux éléments structurels intermédiaires comporte un profilé délimitant partiellement un canal interne tourné vers un plan dans lequel le film plastique s'étend. Ces profilés sont amenés à être enfilés sur des flasques d'assise, ce qui facilite encore le montage de la nappe de suspension.

L'invention a pour autre objet une assise de véhicule comprenant une armature et une nappe de suspension conforme à l'invention, dans laquelle ladite structure d'accrochage est accrochée à l'armature de sorte que la nappe de suspension est fixée à l'armature.

Selon une caractéristique possible de l'invention, l'armature comprend une traverse avant, la traverse avant comportant une première barre cylindrique, la nappe de suspension comporte le au moins un crochet mentionné ci-dessus, et ledit au moins un crochet est encliqueté sur la première barre cylindrique.

Selon une caractéristique possible de l'invention, l'armature comprend en outre une traverse arrière, la traverse arrière comportant une deuxième barre cylindrique parallèle à la première barre cylindrique, la nappe de suspension comporte le au moins un clip mentionné ci-dessus, et ledit au moins un clip est clipsé sur la deuxième barre cylindrique.

Selon une caractéristique possible de l'invention, l'armature comprend en outre deux flasques d'assise parallèles et fixées à la traverse avant et à la traverse arrière, la nappe de suspension comporte les deux profilés mentionnés ci-dessus, et chacun desdits profilés est enfilé sur une dite flasque d'assise.

L'invention a pour autre objet un procédé de montage d'une nappe de suspension comportant le au moins un crochet et le au moins un clip mentionnés ci-dessus, dans une assise de siège de véhicule comportant la traverse avant et la traverse arrière mentionnées ci-dessus.

Selon l'invention, le procédé de montage comprend les étapes suivantes :
- une étape d'encliquetage dudit au moins un crochet sur la première barre cylindrique,
- une étape de basculement de la structure d'accrochage autour de la première barre cylindrique servant comme point d'appui, cette étape de basculement conduisant à clipser ledit au moins un clip sur la deuxième barre cylindrique.

Selon une autre caractéristique possible de l'invention, la nappe de suspension comporte les deux profilés mentionnés ci-dessus, l'assise de siège de véhicule comporte les deux flasques d'assise mentionnés ci-dessus, et l'étape d'encliquetage comprend le fait d'enfiler chacun desdits profilés sur une dite flasque d'assise.

### Brève description des figures

La description qui va suivre en regard des dessins annexés, donnés à titre d'exemples non limitatifs, fera bien comprendre en quoi consiste l'invention et comment elle peut être réalisée. Sur les figures annexées :
[Fig. 1] représente une vue partielle en perspective d'une armature d'un siège de véhicule,
[Fig. 2] représente une vue en perspective d'une nappe de suspension selon l'invention,
[Fig. 3] représente une vue en perspective d'une nappe de suspension selon l'invention en cours d'accrochage sur une armature d'une assise de siège de véhicule,
[Fig. 4] représente une vue de côté d'un élément d'accrochage avant d'une nappe de suspension selon l'invention,
[Fig. 5] représente une vue en perspective d'une nappe de suspension selon l'invention en cours d'accrochage sur une armature d'une assise de siège de véhicule,
[Fig. 6] représente une vue en coupe d'une nappe de suspension selon l'invention accrochée sur une armature d'une assise de siège de véhicule,
[Fig. 7] représente une vue en perspective d'une nappe de suspension selon l'invention accrochée sur une armature d'une assise de siège de véhicule.

### Description de mode(s) de réalisation

Dans les figures, et à moins qu'il n'en soit disposé autrement, les éléments identiques porteront les mêmes signes de référence.

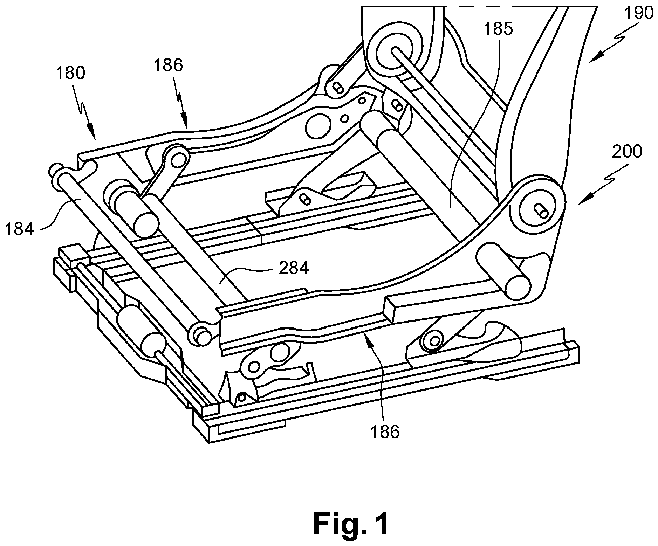

En se référant à la figure 1, une armature 200 d'un siège de véhicule comporte une armature d'assise 180 et une armature de dossier 190, ici montée pivotante par rapport à l'armature d'assise 180.

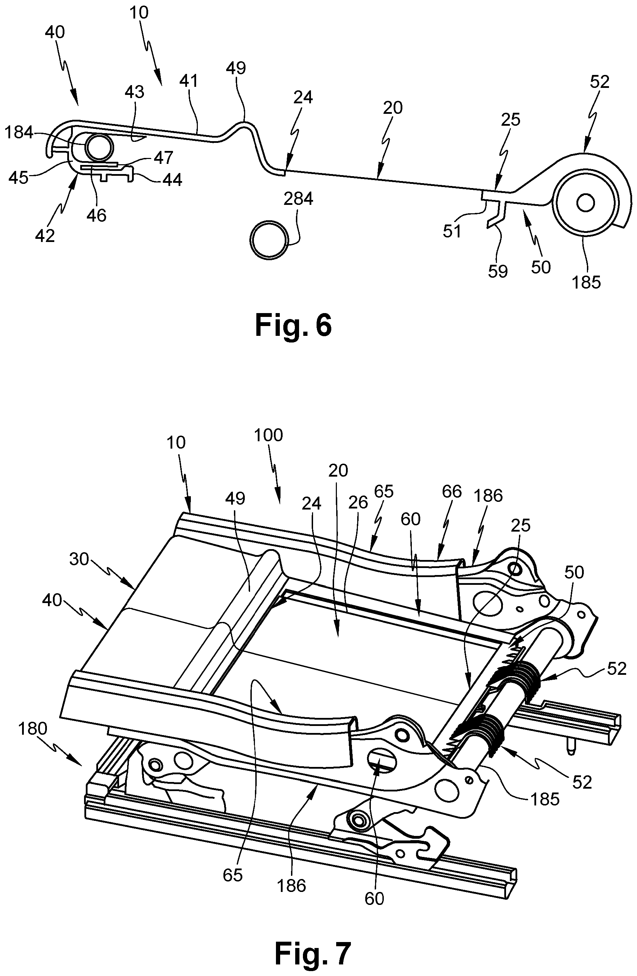

L'armature d'assise 180 est destinée à être fixée au véhicule, par exemple via des rails comme représenté sur la figure 1 et la figure 7. L'armature d'assise 180 comprend une traverse avant qui comporte une première barre cylindrique 184, et une traverse arrière qui comporte une deuxième barre cylindrique 185. Les barres cylindriques 184 et 185 sont parallèles entre elles, et peuvent notamment être parallèles à un axe transversal du véhicule. L'armature d'assise 180 comprend de plus deux flasques d'assise 186 fixées à la traverse avant et à la traverse arrière. Les flasques d'assise 186 sont parallèles entre elles et orthogonales aux barres cylindriques 184 et 185. Les flasques d'assise 186 peuvent notamment être parallèles à un axe longitudinal du véhicule.

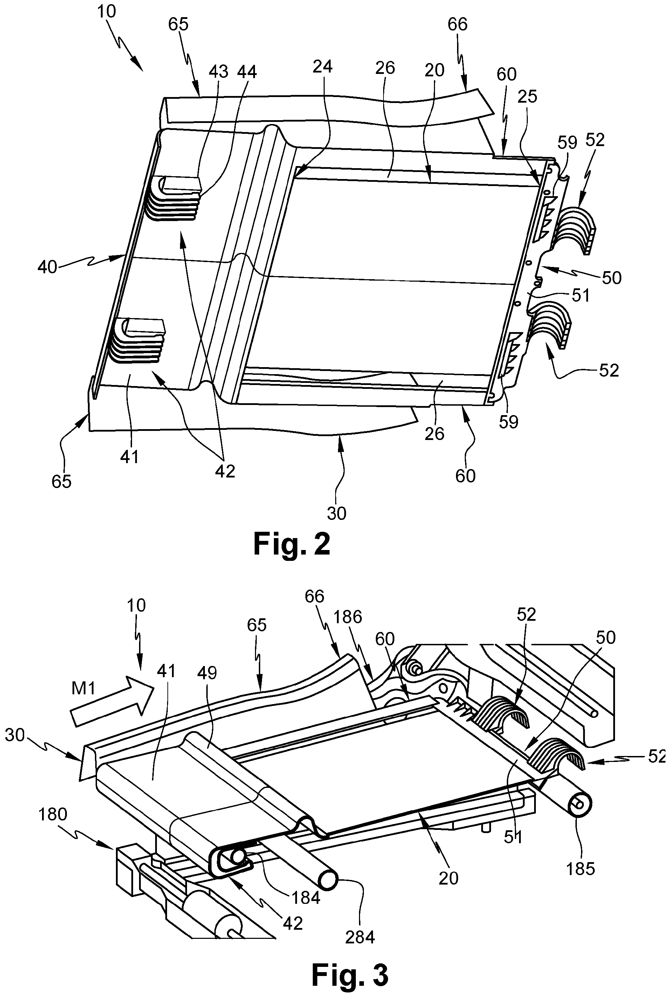

En se référant à la figure 2, une nappe de suspension 10 selon l'invention comprend un film plastique 20 de suspension de forme rectangulaire et une structure d'accrochage 30. Le film plastique 20 peut par exemple être réalisé en polyester, tel que du PBT (Polytéréphtalate de butylène).

La structure d'accrochage 30 comporte un élément d'accrochage avant 40 et un élément d'accrochage arrière 50. L'élément d'accrochage avant 40 est surmoulé dans une extrémité avant 24 du film plastique 20. L'élément d'accrochage arrière 50 est surmoulé dans une extrémité arrière 25 du film plastique 20.

La structure d'accrochage 30 est monobloc, c'est-à-dire que l'élément d'accrochage avant 40, l'élément d'accrochage arrière 50, et les autres parties décrites ci-après de la structure d'accrochage 30 représentent une seule et même pièce. Ainsi, l'élément d'accrochage avant 40 et l'élément d'accrochage arrière 50 sont venus de matière avec, autrement dit formés d'un seul tenant avec, au moins un élément structurel intermédiaire 60. L'au moins un élément structurel intermédiaire 60 est espacé par rapport au film plastique 20, autrement dit un espace 26 est ménagé entre l'élément structurel intermédiaire 60 et un bord du film plastique 20. De préférence, comme représenté sur la figure 2, deux éléments structurels intermédiaires 60 sont disposés de part et d'autre du film plastique 20.

La structure d'accrochage 30 est de préférence obtenue par moulage. Ainsi, l'élément d'accrochage avant 40, l'élément d'accrochage arrière 50, l'au moins un élément structurel intermédiaire 60 et les autres parties décrites ci-après de la structure d'accrochage 30 sont préférentiellement réalisés dans le même matériau, qui peut par exemple être un polymère.

En se référant aux figures 2 et 6, l'élément d'accrochage arrière 50 comprend une nervure 51 et au moins un clip 52 faisant saillie de la nervure 51. La nervure 51 est surmoulée dans l'extrémité arrière 25 du film plastique 20, comme représenté sur la figure 6. De préférence, plusieurs clips 52 sont répartis le long de la nervure 51. Dans l'exemple représenté, l'élément d'accrochage arrière 50 comprend deux clips 52.

En se référant aux figures 2, 4 et 6, l'élément d'accrochage avant 40 comporte une plaque 41 portant au moins un crochet 42, et une bosse anti-sous-marinage 49 entre l'extrémité avant 24 du film plastique 20 et la plaque 41. De préférence, plusieurs crochets 42 sont répartis le long de la plaque 41. Dans l'exemple représenté, l'élément d'accrochage avant 40 comprend deux crochets 42.

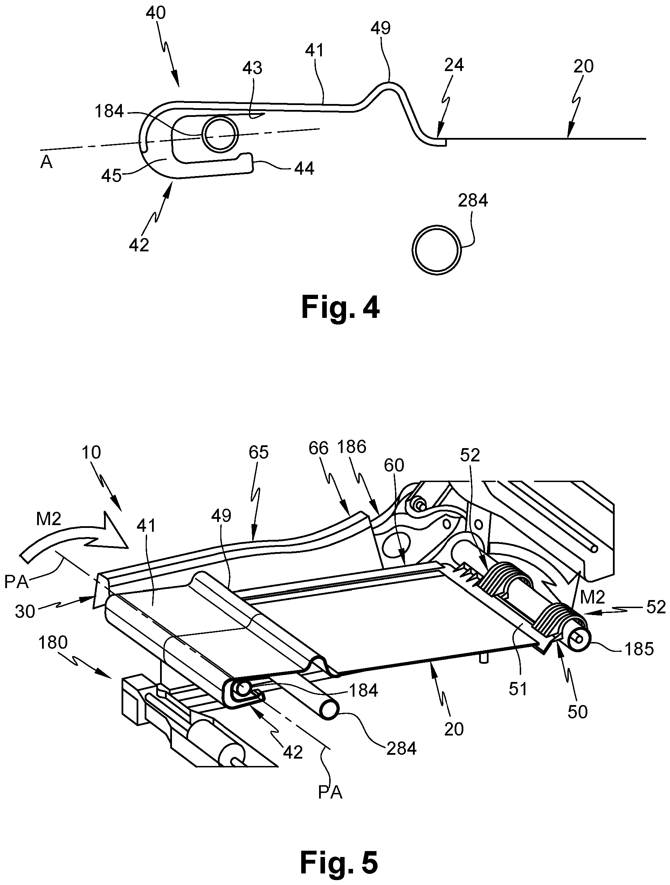

On décrit maintenant les crochets 42 en se référant à la figure 4 et à la figure 6, la figure 4 étant une vue de côté de l'élément d'accrochage avant 40 et la figure 6 étant une vue en coupe de la nappe de suspension 10. Comme représenté, un crochet 42 est délimité par deux bords 43, 44 parallèles. Un premier bord 43 s'étend le long de la plaque 41 (cf. figure 2) et forme une première extrémité du crochet 42 par lequel le crochet 42 est solidarisé à la plaque 41. Un deuxième bord 44 correspond à une extrémité libre du crochet 42. Le crochet 42 comprend ainsi une paroi 45 qui s'étend entre le premier bord 43 et le deuxième bord 44 et qui est incurvée. La paroi 45 est avantageusement incurvée sur plus de 180°. Le crochet 42 est ainsi incurvé sur plus de 180° en allant du premier bord 43 au deuxième bord 44. Le deuxième bord 44 et le sommet de la bosse anti-sous-marinage 49 sont de part et d'autre du plan de la plaque 41, autrement dit la bosse anti-sous-marinage 49 est en saillie à l'opposé du deuxième bord 44 par rapport à la plaque 41. La paroi incurvée 45 délimite partiellement un canal interne oblong. La plus grande dimension du canal interne oblong, en section transversale orthogonalement aux bords 43, 44, est selon un axe A (cf. figure 4) formant un angle non nul avec le plan de la plaque 41. L'angle est avantageusement inférieur ou égal à 20°, préférentiellement inférieur ou égal à 10°.

On décrit maintenant un procédé de montage d'une nappe de suspension 10 conforme à l'invention.

En se référant à la figure 3 et à la figure 4, le procédé de montage comprend une étape d'encliquetage du au moins un crochet 42 sur la première barre cylindrique 184. Sur la figure 3, l'armature 180 et la nappe de suspension 10 ont été coupées selon un plan orthogonal aux barres cylindriques 184, 185 et situé entre les deux éléments structurels intermédiaires 60, afin de mieux montrer la coopération d'un crochet 42 avec la première barre cylindrique 184. Pour encliqueter le crochet 42 sur la première barre cylindrique 184, on fait translater la structure d'accrochage 30. La flèche M1 sur la figure 3 indique le sens et la direction de cette translation de la structure d'accrochage 30. Comme cela est visible sur la figure 3 et la figure 4, la translation de la structure d'accrochage 30 conduit à insérer la première barre cylindrique 184 dans le canal interne oblong du crochet 42, conduisant à encliqueter le crochet 42 sur la première barre cylindrique 184.

Comme cela est visible sur la figure 6, le crochet 42 comporte préférentiellement une nervure interne 46. La nervure interne 46 présente un troisième bord 47 parallèle aux bords 43, 44 qui correspond à une extrémité libre de la nervure interne 46. La présence de la nervure interne 46 tend à diminuer l'ouverture du canal interne oblong car la nervure interne 46 fait saillie de la paroi incurvée 45 à l'intérieur du canal interne oblong en direction des bords 43, 44. Avantageusement, la nervure interne 46 diminue l'ouverture du canal interne oblong de sorte que cette ouverture est légèrement inférieure au diamètre externe de la première barre cylindrique 184. Ainsi, la première barre cylindrique 184 est insérée dans le canal interne oblong du crochet 42 au prix d'un certain effort, après quoi l'élément d'accrochage avant 40 est solidement fixé à la première barre cylindrique 184.

En se référant à la figure 5, le procédé de montage comprend une étape subséquente de basculement de la structure d'accrochage 30. Plus précisément, on fait basculer la structure d'accrochage 30 autour de la première barre cylindrique 184, laquelle sert comme point d'appui puisque la première barre cylindrique 184 dans le canal interne oblong du crochet 42. Les flèches M2 sur la figure 5 indiquent le sens et la direction de ce basculement de la structure d'accrochage 30. Le trait mixte PA sur la figure 5 indique l'axe de la première barre cylindrique 184 autour duquel la structure d'accrochage 30 bascule. Comme indiqué par la flèche M2 à droite sur la figure 5, le basculement de la structure d'accrochage 30 conduit à clipser le au moins un clip 52 sur la deuxième barre cylindrique 185.

Avantageusement, les deux éléments structurels intermédiaires 60 comportent chacun un profilé 65. Chaque profilé 65 délimite partiellement un canal interne tourné vers le plan du film plastique 20. Dans ce cas, l'étape d'encliquetage comprend le fait d'enfiler les profilés 65 sur les flasques d'assise 186, ce qui guide la translation de la nappe de suspension 10. Pour cela le canal interne présente une section transversale correspondant au contour extérieur des flasques d'assise 186. En se référant à la figure 3 et à la figure 5, l'extrémité arrière 66 des profilés 65 est avantageusement évasée de sorte que les flasques d'assise 186 n'interfèrent pas avec le basculement de la structure d'accrochage 30 au cours de l'étape de basculement.

À l'issue de l'étape de basculement, la structure d'accrochage 30 est accrochée à l'armature 180 de sorte que la nappe de suspension 10 est fixée à l'armature 180. Les crochets 42 sont encliquetés sur la première barre cylindrique 184 et les clips 52 sont clipsés sur la deuxième barre cylindrique 185. On obtient ainsi une assise de siège de véhicule 100, représentée sur la figure 6 et la figure 7, et comprenant l'armature 180 et la nappe de suspension 10 fixée à l'armature 180.

Ensuite, une matelassure non représentée sur les figures est déposée sur la nappe de suspension 10. La structure d'accrochage 30 de la nappe de suspension 10 peut comporter des éléments servant à fixer la matelassure. À titre d'exemple, l'élément d'accrochage arrière 50 peut comprendre un ou plusieurs profils d'accrochage 59 de la matelassure, comme cela est mieux visible sur les figures 2 et 6. Il est à préciser que la bosse anti-sous-marinage 49, qui s'étend continûment entre les deux profilés 65 comme représenté sur les figures, sera recouverte par la matelassure. Enfin, une coiffe est fixée à la matelassure par rappels ou bien est fixée par rembordement à la structure d'accrochage 30.

En se référant aux figures 1, 3, 4, 5 et 6, la traverse avant peut comporter une barre cylindrique 284, additionnelle à la barre cylindrique 184 ou bien remplaçant la barre cylindrique 184. Les barres cylindriques 184, 284 peuvent fournir différentes fonctionnalités à l'assise de siège de véhicule 100, comme une réhausse, une inclinaison réglable, etc. La structure d'accrochage 30 peut être accrochée comme décrit précédemment en encliquetant les crochets 42 sur la barre cylindrique 284 et non sur la barre cylindrique 184, simplement en modifiant la géométrie et/ou la position des crochets 42 pour permettre d'encliqueter ceux-ci sur la barre cylindrique 284. Il est possible de modifier la géométrie et/ou la position des crochets 42 sans modifier le reste de la structure d'accrochage 30.

## Revendications

1. Nappe de suspension (10) d'une assise de siège de véhicule (100), la nappe de suspension (10) comprenant :
- un film plastique (20) présentant une extrémité avant (24) et une extrémité arrière (25) ; et
- une structure d'accrochage (30) comportant un élément d'accrochage avant (40) et un élément d'accrochage arrière (50),
dans laquelle l'élément d'accrochage avant (40) est surmoulé dans l'extrémité avant (24) du film plastique (20) et l'élément d'accrochage arrière (50) est surmoulé dans l'extrémité arrière (25) du film plastique (20),
**caractérisée en ce que** la structure d'accrochage (30) est monobloc, de sorte que l'élément d'accrochage avant (40) et l'élément d'accrochage arrière (50) sont venus de matière avec au moins un élément structurel intermédiaire (60) espacé par rapport au film plastique (20).

2. Nappe de suspension (10) selon la revendication 1, dans laquelle l'élément d'accrochage avant (40) comporte une plaque (41) et au moins un crochet (42), ledit au moins un crochet (42) comprenant une première extrémité (43) s'étendant le long de la plaque (41) et par lequel il est solidarisé à ladite plaque (41) et une deuxième extrémité libre (44) qui est parallèle à la première extrémité (43), et ledit au moins un crochet (42) délimitant partiellement un canal interne oblong, une plus grande dimension du canal interne oblong, en section transversale orthogonalement à la première extrémité (43) et à la deuxième extrémité libre (44), étant selon un axe (A) formant un angle non nul avec un plan dans lequel la plaque (41) s'étend.

3. Nappe de suspension (10) selon la revendication 2, dans laquelle l'élément d'accrochage avant (40) comporte une bosse anti-sous-marinage (49) entre l'extrémité avant (24) du film plastique (20) et la plaque (41), la bosse anti-sous-marinage (49) étant en saillie à l'opposé de la deuxième extrémité libre (44) du crochet (42) par rapport à la plaque (41).

4. Nappe de suspension (10) selon l'une quelconque des revendications 1 à 3, dans laquelle l'élément d'accrochage arrière (50) comprend une nervure (51) et au moins un clip (52) faisant saillie de la nervure (51).

5. Nappe de suspension (10) selon l'une quelconque des revendications 1 à 4, dans laquelle la structure d'accrochage (30) comporte deux dits éléments structurels intermédiaires (60) disposés de part et d'autre du film plastique (20), et chacun des deux éléments structurels intermédiaires (60) comporte un profilé (65) délimitant partiellement un canal interne tourné vers un plan dans lequel le film plastique (20) s'étend.

6. Assise de siège de véhicule (100) comprenant une armature (180) et une nappe de suspension (10) selon l'une quelconque des revendications 1 à 5, dans laquelle ladite structure d'accrochage (30) est accrochée à l'armature (180) de sorte que la nappe de suspension (10) est fixée à l'armature (180).

7. Assise de siège de véhicule (100) selon la revendication 6, dans laquelle l'armature (180) comprend une traverse avant, la traverse avant comportant une première barre cylindrique (184), la nappe de suspension (10) est selon la revendication 2 ou la revendication 3, et ledit au moins un crochet (42) est encliqueté sur la première barre cylindrique (184).

8. Assise de siège de véhicule (100) selon la revendication 7, dans laquelle l'armature (180) comprend en outre une traverse arrière, la traverse arrière comportant une deuxième barre cylindrique (185) parallèle à la première barre cylindrique (184), la nappe de suspension (10) est selon la revendication 4, et ledit au moins un clip (52) est clipsé sur la deuxième barre cylindrique (185).

9. Assise de siège de véhicule (100) selon la revendication 8, dans laquelle l'armature (180) comprend en outre deux flasques d'assise (186) parallèles et fixées à la traverse avant et à la traverse arrière, la nappe de suspension (10) est selon la revendication 5, et chacun desdits profilés (65) est enfilé sur une dite flasque d'assise (186).

10. Procédé de montage d'une nappe de suspension (10) conforme à la revendication 4 prise en combinaison avec la revendication 2 ou la revendication 3, dans une assise de siège de véhicule (100) conforme à la revendication 8, le procédé de montage étant **caractérisé en ce qu'**il comprend les étapes suivantes :
- une étape d'encliquetage dudit au moins un crochet (42) sur la première barre cylindrique (184),
- une étape de basculement de la structure d'accrochage (30) autour de la première barre cylindrique (184) servant comme point d'appui, cette étape de basculement conduisant à clipser ledit au moins un clip (52) sur la deuxième barre cylindrique (185).
